# EUROPEAN PATENT APPLICATION

(11) **EP 4 756 265 A1**
(43) Date of publication of application: **10.06.2026**
(21) Application number: 24307030.7
(22) Date of filing: 04.12.2024
(51) Int. Cl.: F16K 1/12, F16K 31/528, F16K 3/24

(54) **DRAIN VALVE, BIOPHARMACEUTICAL CONTAINER INCLUDING SUCH A DRAIN VALVE AND BIOPHARMACEUTICAL PRODUCT PROCESSING APPARATUS COMPRINSING SUCH A BIOPHARMACEUTICAL CONTAINER**

(71) Applicant: Sartorius Stedim FMT, 13400 Aubagne (FR)
(72) Inventor: GIBELIN, Jérémy, 13400 Aubagne (FR); GOMBERT, Marie, 13400 Aubagne (FR)
(74) Representative: Plasseraud IP

(57) **Abstract**

A drain valve (30) for draining a biopharmaceutical container (12) comprises a tubular valve body (58) extending along an axis (A); a plunger (60) which is moveable inside the tubular valve body (58) along said axis (A); a control body (62), rotatable with regard to the valve body (58) around the axis (A). The plunger (60) has one slot (88) defining a cam track and the valve body (58) has one pin (72) received in the slot (88). The plunger (60) has one bead (91) and the control body (62) has one rectilinear groove (90) extending parallelly to the axis (A) and designed to receive the bead (91), so that a rotation of the control body (62) with regard to the valve body (58) around the axis (A) induces a movement of the plunger (60) along the axis (A) of the valve body (58).

## Description

### Technical field

This disclosure pertains to the biopharmaceutical technical field and more particularly to a drain valve for a biopharmaceutical container, to a biopharmaceutical container including such a drain valve and to a biopharmaceutical product processing apparatus comprising such a biopharmaceutical container. The biopharmaceutical product processing apparatus may for example include a bioreactor vessel provided with a drain valve.

The term "biopharmaceutical fluid" is understood to mean a product of biotechnology (culture media, cell cultures, buffer solutions, artificial nutrition liquids, blood products and blood product derivatives) or a pharmaceutical product or more generally a product intended for use in the medical field. The invention also applies to other products subject to similar requirements regarding packaging.

### Background art

In the biopharmaceutical industry, single-use or sterilized, disposable containers are often used because they avoid a time-consuming step of cleaning and reduce the risk of contamination of the content. Such single-use containers can be flexible or collapsible plastic bags. In use, a single-use bag can be unpacked from a sealed packaging and directly filled with the desired fluid for storing and/or manipulation purpose. Depending on the purpose, the single-use bag may be provided with one or more ports typically located at front faces of the bag, which provide connection points for sensors, probes and/or fluid lines.

For example, a harvest or drain port is typically located at a front face of the single-use bag designed to be at the bottom of the single-use bag when used. The drain port can e.g. be configured for insertion through an opening in a bottom of a vessel supporting the single-use bag. The drain port can thus allow for a drain line to be connected to the single-use bag for draining the single-use bag and/or harvesting the biopharmaceutical product present in the single-use bag, e.g. after a bioprocess using the single-use bag has been completed.

A drain valve is generally provided at the drain ports to selectively open and close the drain port of the single-use bag. Classically, a drain valve includes a plunger movable with regard to a valve body between an open position of the drain valve wherein the plunger defines a path for a liquid through the drain valve; and a closed position of the drain valve in which the position of the plunger prevent fluid to path through the drain valve. Preferably, in the closed position of the drain valve, the plunger is flush with the valve body and/or with the film forming the single-use bag, so as to limit or even avoid any dead volume of liquid in the single-use bag. One or more ring seals may be provided between the plunger and the drain valve body to limit the risk of leak of the content of the single-use bag and/or to ensure sterility of the interior of the single-use bag.

Such a drain valve is for example known from WO-A-2011/133437. In this document, two first ring seals are provided near the proximal end of the plunger, near the interior of the bag, so that these two ring seals extend inside the interior of the bag in the open position of the drain valve. These two ring seals principally avoid leaks of biopharmaceutical product in the closed position of the drain valve. Two further ring seals are provided along the plunger which extend between the plunger and the drain valve body in both open and closed positions. A first one extends nearer to the interior the bag, the second one extends nearer to the opening of the drain valve outside the bag These two further ring seals define the sterile portion of the drain valve corresponding to the portion of the drain valve extending between the first ring seal and the opening of the drain valve inside the bag, in closed position of the valve. The second seal protects against external contaminants, marking the non-sterile zone extending from this second seal to the opening of the drain valve outside the bag. Sterility is not guaranteed in the intermediate portion of the drain valve between the first and second seals. However, when moving the plunger from the closed position to the open position, a portion of the plunger which in closed position is in the intermediate portion of the drain valve, then extends in the sterile portion of the drain valve thus jeopardizing the sterility of the content of the bag.

WO-A-2007/035592 describes a second drain valve of the above-described type also comprising a first and a second seals between the plunger and the drain body. In this document, when the plunger is moved in the open position, a portion of the plunger which is in the sterile portion of the drain valve in the closed position of the drain valve, extends in the intermediate portion in the open position of the drain valve. Thus, if the drain valve is to be closed again, the sterility of the content of the bag can also be jeopardized.

Finally, WO-A-2013/011232 describes a third example of a drain valve of the above-described type. According to the teaching of WO-A-2013/011232, the drain valve comprises three axially distant ring seals between the plunger and the drain valve body. These seals define distinct zones:
- the proximal seal maintains a sterile zone, which contains the fluid product,
- the distal seal protects against external contaminants, marking the non-sterile zone, and
- an intermediate zone extends between the sterile zone and the non-sterile zone, which includes the intermediate seal serving as a barrier between the sterile and non-sterile zones, ensuring that the sterile zone remains uncontaminated during drain valve operation. Sterility is also not guaranteed in the whole intermediate zone so that the same issue of jeopardizing sterility of the content of the bag can happen in case the drain valve is to be closed again after a first opening.

### Brief summary of the invention

The present disclosure describes a drain valve for draining a biopharmaceutical container, comprising:
- a tubular valve body extending along a main extension axis and having an interior passageway,
- a plunger which is moveable inside the tubular valve body along said main extension axis of the valve body between a first position allowing fluid to flow through the interior passageway and a second position blocking fluid to flow through the interior passageway,
- a control body, rotatable with regard to the valve body around the main extension axis,

wherein one among the plunger and the valve body has at least one slot defining a cam track and another among the plunger and the valve body has at least one pin received in the at least one slot, and
wherein one among the plunger and the control body has at least one bead and another one among the plunger and the control body has at least one rectilinear groove extending parallelly to the main extension axis and designed to receive the at least one bead, so that a rotation of the control body with regard to the valve body around the main extension axis induces a movement of the plunger along the main extension axis of the valve body.

According to different embodiments, the drain valve according to the invention can comprise one or more of the following features, taken alone or in combination:
- the drain valve comprises at least one first seal between the control body and the valve body, wherein the at least one first seal extends in a plane perpendicular to the main extension axis of the tubular valve body delimiting a sterile portion of the drain valve, especially between the tubular valve body and the control body, and a non-sterile portion of the drain valve, especially between the tubular valve body and the control body, wherein the drain valve preferably comprises two first seals between the control body and the valve body, one first seal extending longitudinally between the plunger and the second first seal, wherein said one first seal extends in a plane perpendicular to the main extension axis of the tubular body delimiting a sterile portion of the drain valve, especially between the tubular valve body and the control body, and a non-sterile portion of the drain valve, especially between the tubular valve body and the control body, wherein the drain valve preferably, wherein each of the at least one first seal is more preferably an O-ring ;
- the drain valve comprises at least one second seal between the plunger and the valve body, each of the at least one second seal being preferably an O-ring;
- the valve body comprises a flange at first end thereof and the plunger is flush with the flange of the valve body in the second position;
- in the first position, the plunger extends at least partially outside the valve body, especially outside the interior passageway inside the valve body;
- wherein in the first position, the plunger extends inside the valve body, especially inside the interior passageway inside the valve body;
- the control body comprises at least one bracket protruding from the valve body in a plane extending perpendicularly to the main extension axis, the control body preferably comprising at least two brackets protruding from the valve body in a plane extending perpendicularly to the main extension axis;
- the drain valve comprises a hose barb, the hose barb being at a second end of the drain valve opposite to the first end of the valve body, when applicable;
- the hose barb is fixed to the control body; and
- the hose barb is monolithic with control body.

According to another aspect, a biopharmaceutical container is described, which comprises a closed bag provided with a drain valve as described above in any of its combinations, the drain valve being sealingly fixed to the bag.

According to another aspect, a biopharmaceutical product processing apparatus is described, which comprises:
a biopharmaceutical container as described above in any of its combinations,
a mixing device at least partially extending in the biopharmaceutical bag and designed to be driven by a motor outside the biopharmaceutical bag.

The biopharmaceutical product processing apparatus can further comprise a vessel receiving the biopharmaceutical container.

The biopharmaceutical product processing apparatus can further comprise a motor designed to be engaged with the mixing device.

The mixing device can be comprised of a rotating rod provided with at least one mixing element fixed on the rotating rod.

According to another aspect, a set is described which comprises:
- at least one drain valve according as described above in any of its combinations, the set preferably comprising several identical drain valves as described above in any of its combinations,
- at least one first hose barb designed to be fixed to the control body, at a second end of the drain valve opposite to the first end of the valve body, when applicable; and
- at least one second hose barb designed to be fixed to the control body, at a second end of the drain valve opposite to the first end of the valve body, when applicable;
wherein said at least one first hose barb and said at least one second house barb are different, said at least one first hose barb and said at least one second house barb being preferably different by at least one among:
- type of barb
- the length, and
- the diameter.

### Brief description of the drawings

The present invention will be better understood from reading the following description of nonlimiting embodiments, with reference to the attached drawings, wherein:

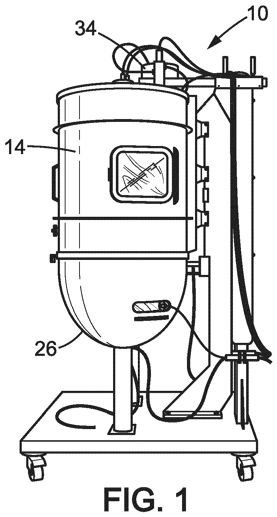

Figure 1 schematically represents a front elevational view of an example of a biopharmaceutical product processing apparatus.

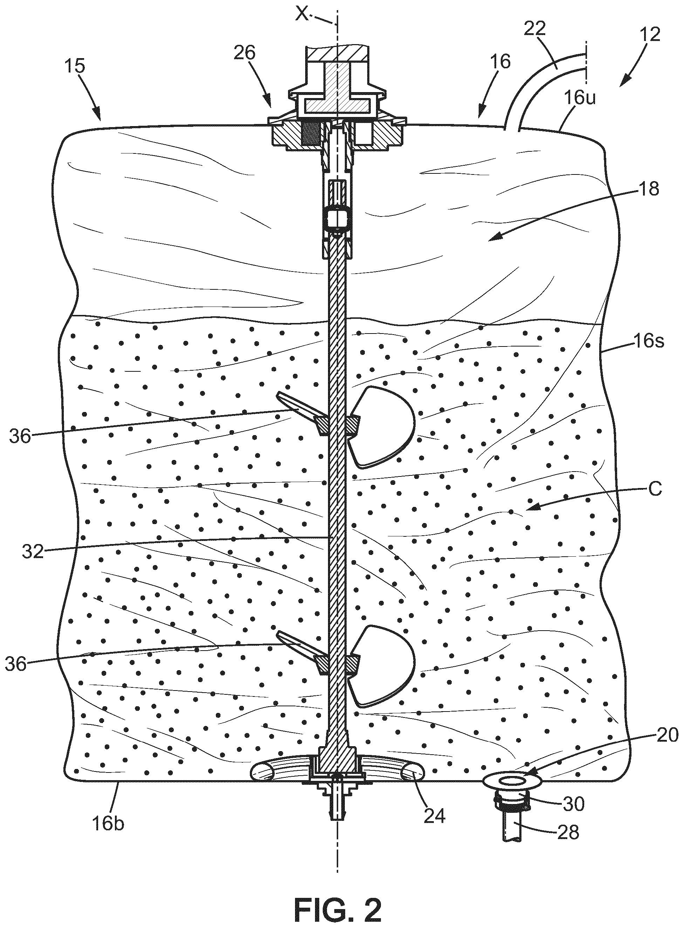

Figure 2 is a schematical view of a single-use bag used in the biopharmaceutical product processing apparatus of Figure 1.
Figure 3 is a perspective view of a drain valve used in the single-use bag of Figure 2, in open position.
Figure 4 shows in perspective, a sectional view of the drain valve of Figure 3, in close position.
Figure 5 shows in perspective, a sectional view of the drain valve of Figure 3, in open position.
Figure 6 shows in perspective, a sectional view of a set comprising a drain valve and of two different hose barbs that can be mounted onto the drain valve.

### Description of embodiments

An example of a mixer-container installation **10** designed to receive a biopharmaceutical fluid C e.g., for mixing, or where appropriate for a chemical and/or biological reaction (or bioreaction), the mixer-container **10** then being a bioreactor.

The biopharmaceutical fluid **C** comprises one or at least one liquid phase. Where appropriate, the biopharmaceutical fluid **C** is formed from multiple components of which at least one is in a liquid phase and of which one or more may be in a solid phase, such as powder.

The mixer-container **10** has a vertical main axis **X.** The mixer-container **10** comprises a container **12** and a rigid outer vessel **14** receiving or housing the container **12.**

The container **12** first comprises a flexible bag **15** formed by a wall **16,** advantageously made of plastic, flexible and fluid tight to the biopharmaceutical fluid **C.** As illustrated, the wall **16** of the bag **15** may comprise a bottom part **16b,** a side part **16s,** and an upper part **16u,** for example formed by one or more welded sections made integral to one another. The bag **15** thus defines an inner space **18,** advantageously sterile, suitable for receiving a quantity of biopharmaceutical fluid **C.** The wall **16** may be completely or partially transparent or translucent in order to be able to view the biopharmaceutical fluid **C** within the inner space **18,** from the exterior.

According to one embodiment, the container **12** is disposable (or single-use).

The container **12** may have a capacity of up to 5000 liters, depending on requirements and applications. However, the container **12** preferably has a capacity of between 10 and 500 liters, more preferably between 50 and 200 liters.

The wordings "vertical", "horizontal", "upper", "lower", refer to the situation in which the mixer-container **10,** and particularly the container **12,** is in a position suitable for operation. It is understood, however, that the mixer-container **10** and the container **12** may occupy other positions or be in other states, for example when they are not in operation. The word "vertical" should not be understood in a narrow sense, but in sense meaning from highest to lowest and vice versa.

The wordings "inner", and "outer" or "exterior" or "outside", respectively refer to within the inner space **18** and outside of the container **12.**

Finally, the wording "axial" on the one hand, and the wordings "radial" and "transverse" on the other hand, refer to what extends in or parallel or substantially parallel to the main axis **X** for the former, and perpendicularly or orthogonally or substantially perpendicularly or orthogonally to the main axis **X** for the latter.

The container **12** also comprises one or several ports to be placed facing a corresponding through holes in the vessel **14.**

In the example illustrated, the container **12** comprises a drain port **20** provided with a drain valve **30** designed to cooperate with a through-port of the vessel **14** for draining biopharmaceutical fluid **C** from the container **12.** The drain port **20** can be opened for draining and otherwise closed.

The term "port" is understood to refer to a physical connection means. Such a port is a through-port when it places in communication the inner space **18** of the container **12** and the exterior of the container **12,** for example for the introduction or discharge of what is to be placed or has been placed in the container **12.** Such a port may also not be a non-through-port when it serves to hold a member of the mixer-container.

Ducts, pouches, reservoirs, if necessary flexible, may be associated with the introduction port **22,** in fluid communication and with a sealed connection and removable where appropriate. Similarly, ducts, pouches, reservoirs, if necessary flexible, may be associated with the drain port **20,** in fluid communication and with a sealed connection and removable where appropriate. For example, s illustrated, the drain port **20** is in fluid communication with a duct **28** through a drain valve **30** to drain or harvest the biopharmaceutical fluid **C** outside the vessel **14.**

In the embodiment represented, the introduction port **22** is located in the upper part **16u** of the wall **16,** while the drain port **20** is located in the lower part **16b** of the container **12,** in particular in the lowest position of the mixer-container **10.** However, this embodiment is not limiting and one or more introduction ports **22** may be located in the lower part **16b** or in the side part **16s** of the container **12.**

The mixer-container **10** may also comprise an aeration device **24** adapted to deliver to the biopharmaceutical fluid **C** a certain quantity of aeration gas. The sparger **24** thus allows aeration of what is in the inner space **18** of the container **12,** whether it is biopharmaceutical fluid or part of its components.

The sparger **24** may comprise an aeration gas supply device having at least one tubular element extending from outside the container **12** with fluid communication. There may be operatively associated, with the sparger **24** just described, at least one aeration gas discharge port formed in the upper part **16u** of the wall **16** of the container **12.** Such an aeration gas discharge port serves to discharge from the container **12,** to the exterior, gas that has not been mixed with the biopharmaceutical fluid **C** of the container **12.**

In some embodiments, the mixer-container **10** may also comprise other ports which are known per se, for example for mounting an operative means, suitable for retaining a member typically for the collection or measurement of data for example, or sample collection for analysis.

The mixer-container **10** also comprises a mixing device **26** for mixing the biopharmaceutical fluid **C** of the container **12.** This mixing device **26** allows mixing what is in the inner space **18** of the container **12,** whether this is biopharmaceutical fluid **C** or some of its components.

The mixing device **26** comprises at least one descending shaft **32,** adapted to be rotated, in particular magnetically, by a motor **34** and to rotate at least one mixing member **36.** The mixing member or members **36** are substantially distanced from the lower part **16b** and the side part **16s** of the wall **16** of the container **12.** As represented, the mixing member **36** may be in the form of a propeller having a hub carrying several blades.

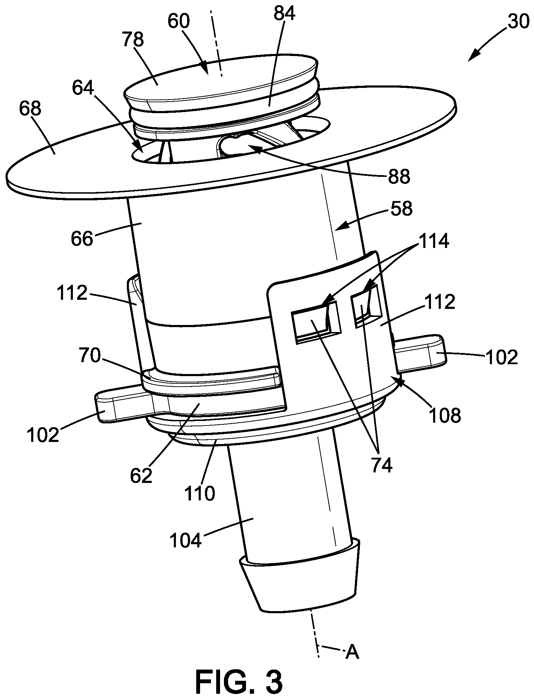

In the following, an example of a drain valve **30** with which the drain port **20** can be provided is described with regard to Figures 3 to 5.

As illustrated, the drain valve **30** essentially comprises a tubular valve body **58,** a plunger **60** and a control body **62.**

According to the embodiment illustrated in Figures 3 to 5, the valve body **58** is tubular, defining an interior passageway **64.** In the present case, the valve body **58** essentially extends along a main direction of extension **A -** which is called in the following the axis of the drain valve **30.** More precisely, the valve body **58** comprises, in the present case consists in, a main portion **66** which is cylindrical, and a main flange **68,** at a fist end of the main portion **66,** in the form of a flat crown extending in a plane perpendicular to the axis **A** of the drain valve **30.** The main flange **68** is designed to be welded to, especially in, the flexible bag **12** to be provided with the drain valve **30,** at a bottom of the flexible bag **12.** The drain valve **30** can thus by sealingly fixed to the container **12.**

The interior passageway **64** is also cylindrical along the axis **A** of the drain valve **30.**

In the present case, the valve body **58** also comprises second flanges **70** at the second end of the main portion **66,** opposite to the first end. The second flanges **70** are substantially smaller or thinner than the main flange **68.** The second flanges **70** can extend around a portion only of the main portion **66.** The second flanges **70** can be symmetrical around the axis **A** of the drain valve **30.**

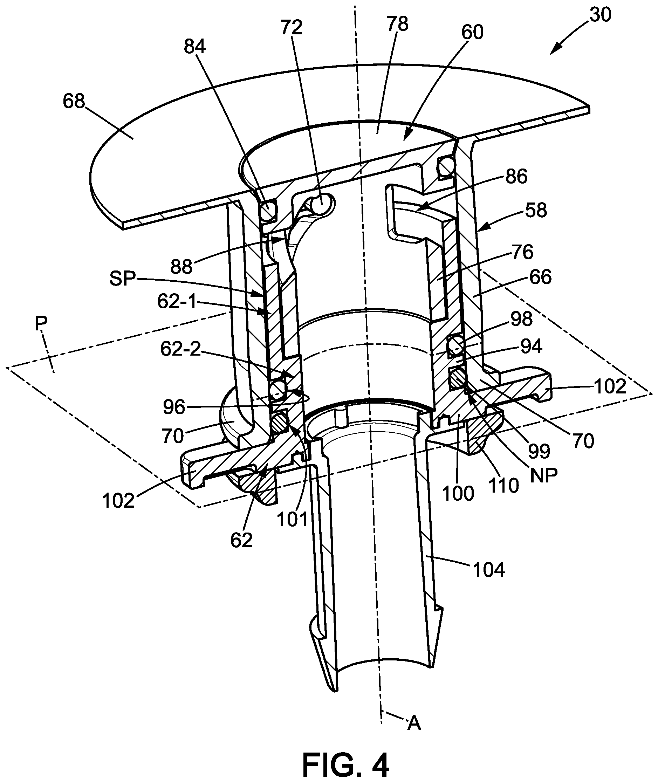

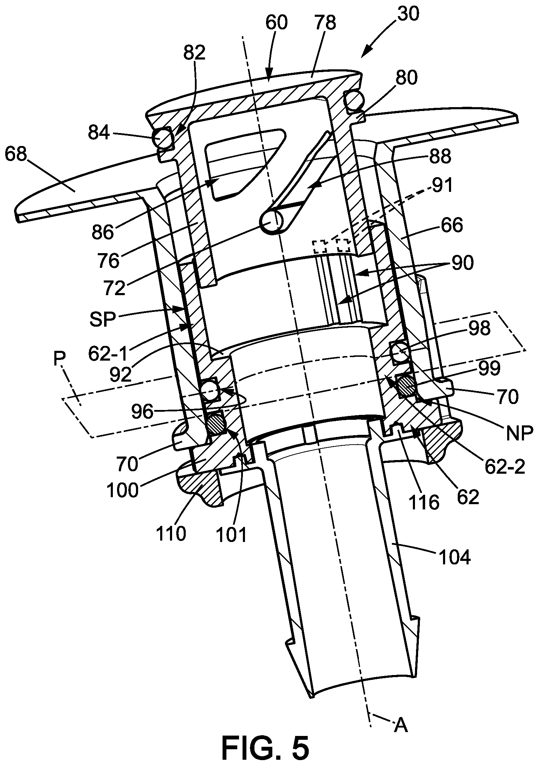

As can be seen in Figures 4 and 5, the valve body **58** also forms two pins **72** - only one pin **72** can be seen on these figures - extending from the main portion **66** into the interior passageway **64.** The two pins **72** can be symmetrically disposed around the axis **A** of the drain valve **30.** As illustrated, each pin **72** is cylindrical and extends in a radial direction with regard to the axis **A** of the drain valve **30.** The main portion **66** of the valve body **58** can also be provided with lugs **74** on the external surface thereof, as illustrated on Figure 3. These lugs **74** can be unevenly distributed (or angularly non-equidistributed) around the axis **A** of the drain valve **30.**

The plunger **60** is moveable inside the valve body **58** along said axis **A** of the drain valve **30,** between a first position of the plunger **60** illustrated in Figure 5, allowing fluid to flow through the interior passageway **64** of the valve body **58,** and a second position of the plunger **60** illustrated on Figure 4, wherein the plunger **60** blocks fluid to flow through the interior passageway **64** of the valve body **58.** The movement of the plunger **60** with regard to the valve body **58** can be helicoidal.

The plunger **60** comprise a cylindrical portion **76** around the axis **A** of the drain valve **30,** and a head **78** at one end of the cylindrical portion **76.**

The diameter of the cylindrical portion **76** is smaller than diameter of the passageway **64** inside the valve body **68** so as to be received therein. On the contrary, the diameter of the head **78** is substantially equal to the diameter of the passageway **64** inside the valve body **68** so that the plunger **60** blocks the passageway **64** when the head **78** is at one end of the passageway **64.** To better fit, the edge of the head **78** can be frustoconical and complementary to a frustoconical edge at the end of the passage **64** surrounded by the main flange **68.**

A circular ridge **80** can be formed on the outer face of the cylindrical portion **76,** whose diameter is substantially equal to the diameter of the head **78** to form a groove **82** between the head **78** and the ridge **80.** A seal, especially an O-ring **84,** can be provided inside the groove **82** to ensure sealing between the cylindrical portion **76** of the plunger **60** and the wall defining the passageway **64** inside the main portion **66** of the valve body **58,** when the plunger **60** is in its second position, closing the drain valve **30.**

The cylindrical portion **76** of the plunger **60** comprises at least one opening **86** designed to:
- face the wall of the main portion **66** of the valve body **58** when the plunger **60** is in its position closing the drain valve **30** ; and
- not to face the wall of the main portion **66** of the valve body **58** when the plunger **60** is in a position opening the drain valve **30.** As illustrated on Figure 5, the at least one opening **86** can e.g. extend outside the main portion **66** of the valve body in this case and outside the interior passageway **64.**

Moreover, the cylindrical portion **76** forms at least one slot **88** - two in the present case - each defining a cam track. Each slot **88** is adapted to receive a respective pin **72** of the valve body **58** to link movements of the valve body **58** and the movements of the plunger **76.** For example, each slot **88** is helicoidal. Each slot **88** can comprise one stop notches at its both ends. For example, each slot **88** comprise a recess near each of its ends adapted to receive the corresponding pin **72.** This way, the plunger **76** can be stably maintained in each of the first and second positions.

The control body **62** also has a generally tubular shape around the axis **A** of the drain valve **30.** The control body **62** comprises a first portion **62-1** which is received in the interior passageway **64** of the valve body **58** and which partly receives the cylindrical portion **66** of the plunger **60.** In the present case, first portion **62-1** of the control body **62** is cylindrical. The outer diameter of the first portion **62-1** is substantially equal to the inner diameter of the interior passageway **64** in the main portion **66** of the valve body **58.** The inner diameter of the first portion **62-1** is substantially equal to the outer diameter of the cylindrical portion **76** of the plunger **60.** Moreover, the inner surface of the first portion **62-1** comprises rectilinear grooves **90** extending parallelly to the axis A of the drain valve **30** designed to receive a corresponding relief **91,** or beads; on the outer surface of the cylindrical portion of the plunger **76.** Accordingly, the plunger **60** can only move parallelly to the axis A of the drain valve **30** with regard to the control body **62.**

The control body **62** comprises a second portion **62-2** adjacent to the first portion **62-1** along the direction of the axis **A** of the drain valve **30.** The second portion **62-2** is cylindrical. The internal diameter of the second portion **62-2** is smaller than the diameter of the first portion **62-1** so as to define a rim **92** against which abuts the plunger **60** in its second position, closing the drain valve **30.**

A circular ridge **94** extends on the outer surface of the second portion **62-2** which defines a first groove **96** on the outer surface of the second portion **62-2** of the control body **62.** A seal, especially an O-ring **98** is received in the first groove **96** to ensure sealing between the control body **62** and the valve body **58.**

The circular ridge **94** further defines a second groove **101** on the outer surface of the second portion **62-2** of the control body **62.** The second groove **101** extends on the outer surface of the second portion **62-2** of the control body **62,** so that the first groove **96** extends, according to the longitudinal axis **A** of the drain valve **30,** between the second groove **101** and the plunger **60.** A seal, especially an O-ring **99** is received in the second groove **101** to ensure a better sealing between the control body **62** and the valve body **58.**

Finally, the control body **62** comprises a flange **100,** extending outside the valve body **58,** in contact with the second flanges **70** of the valve body **58.** The control body **62** also comprise two brackets **102** extending symmetrically in the plane of the flange **100** of the control body **62.**

In the illustrated embodiment, the drain valve **30** further comprise a hose barb **104.** In the present case, the hose barb **104** is a separate different piece than the control body **62** which is fixed to the control body **62.** In the present case, the hose barb **104** is welded onto the control body **62.** As illustrated, the hose barb **104** can form a flange **106** which is fixed to the flange **100** of the control body **62.** The flange **106** can for example comprise a first relief complementary to a second relief on the flange **100** of the control body to help to fix the hose barb **104** to the control body **62.** The first and second reliefs can be a circular groove and a complementary circular notch. Advantageously, different hose barbs **104** - especially having different diameters and/or different lengths - can thus be fixed on a same type of control body **62.**

Finally, as shown on figures 3 to 5, the drain valve **30** comprises a socket **108** fixed to the valve body **58** and designed to maintain the control body **62** in position with regard to the valve body **58.** In the present case, the socket **108** comprises an annular front face **110** designed to sandwich the flange **106** of the hose barb **104** with the second flanges **70** of the valve body **58.** The socket further comprises lateral panels **112** with openings **114** therethrough to receive the lugs **74** on the main portion **66** of the valve body **58.** Thus, the socket **108** can be snap-fitted onto the valve body **58.**

As can be seen e.g., on Figure 3, the panels **112** can be angularly distant, of a distance equal to the angularly length of the second flange **70.** In this way, each of the second flanges **70** is received between the two lateral panels **112** in a way limiting or even preventing a rotational movement of the valve body **58** with regard to the socket **108** around the axis **A** of the drain valve **30.**

The drain valve **30** can be operated as follows.

In a closed position, as illustrated on Figure 4, the head **78** of the plunger **60** is received in the interior passageway **64** in the valve body **58** which is thus closed. Thus, no liquid can flow inside the interior passageway **64.** Advantageously, in this position, the head **78** of the plunger **60** is flush with the flange **68** of the valve body **58.** Thus, no dead volume of liquid can rest on top of the head **78** of the plunger **60,** surrounded by the flange **68** of the valve body **58** - if the head **78** is recessed with regard to the flange **68** - or on the flange **68** of the valve body **58,** around the head **78** of the plunger **60** - if the head **78** protrudes from the flange **68** along the direction of the axis **A** of the drain valve **30.**

To open the drain valve **30,** the control body **62** is rotated with regard to the valve body **58** around the axis **A** of the drain valve **30.** This can easily be done by acting on the brackets **102** of the control body **62** with one hand, the other hand holding the valve body **58** still. Thus, no specific tool is necessary to operate the drain valve **30** which can on the contrary easily be manipulated by a user.

The rotation of the control body **62** with regard to the valve body **58** around the axis **A** of the drain valve **30** induces a rotation of the plunger **60** with regard to the valve body **58** around the axis **A** of the drain valve **30,** thanks to the reliefs on the plunger **60** received in the rectilinear grooves **90** in the control body **58.**

As a consequence, the pins **72** are moved inside the slots **88** forming track cams. As a consequence, the plunger **60** is also moved with regard to the valve body **58** along the direction of the axis **A** of the drain valve **30.** This movement of the plunger **60** along the direction of the axis **A** of the drain valve **30** opens the interior passage **64** in the valve body **58.** Especially, the openings **86** inside the plunger **60** are moved so that they do not face the wall defining the interior passage **64** in the valve body **58.** A liquid can thus flow through the openings **86** in the plunger, then through the control body **62** and finally though the hose barb **104.**

As can be understood by one with ordinary skills in the art, the drain valve **30** is particularly advantageous with regard to the prior art drain valves because in any position, the plunger **60** stay in fluid communication only with a part of the drain valve **30** which is sterile. Especially, the plunger **60** is never in contact or in fluid communication with a portion of the wall of the interior passageway **64** between the O-ring **98** and the outlet at the free end of the house barb **104,** especially between the O-ring **98** and the flange **100** of the control body **62.**

In other words, a plan **P** corresponding the extension plane of the two O-rings **99** (or the median plane of the O-ring **98** in case there is no O-ring **99)** can be seen as delimiting a sterile portion **SP** and a non-sterile portion **NP** of the drain valve **30.** As can be seen in the drawings, in any position, the plunger **60** stay in the sterile portion **SP** of the drain valve **30** and never traverse the separating plane **P.**

The invention is not limited to the example described above. On the contrary, one with ordinary skills in the art can imagine various embodiments of the invention.

For example, the O-rings used in the embodiment described above could be replaced by other sealings. Moreover, two seals, especially two O-rings, can be provided between the control body **62** and the valve body **58.**

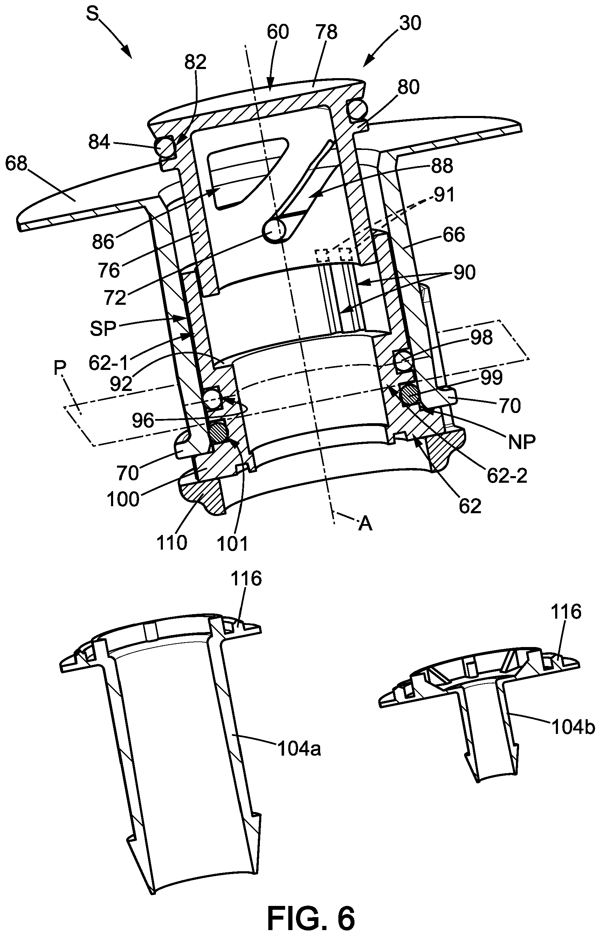

As described above, the hose barb **104** can be fixed to the control body **62.** As illustrated on Figure 6, different hose barbs **104a, 104b** can be fixed to a same control body **62** thus defining a set **S** of a drain valve **30** and different hose barbs **104a, 104b.** The hose barbs **104A, 104B** can be different by at least one among:
- the type of barb
- the length, and
- the diameter.

According to other embodiments, the hose barb can be monolithic with the control body **62.**

Also, in the example described above, in the first position of the plunger **60,** opening the drain valve **30,** the plunger **60** extends partially outside the valve body **58,** especially outside the interior passageway **64** inside the valve body **58.** According to another embodiment, the drain valve **30** can be open in another position of the plunger **60,** especially in a position where the plunger **60** extends inside the valve body **58,** especially inside the interior passageway **64** inside the valve body **58.** For example, in the open position of the drain valve **30,** the head **78** of the plunger **60** can be in a recessed position in the valve body **58** compared to its position when the drain valve **30** is closed. The head **78** of the plunger **60** extends in particular inside the interior passageway **64** of the valve body **58** in this case.

It can be noticed also that the slot **88** can be provided on the valve body **58,** the pins **72** being then provided on the plunger **60.** The linear grooves **88** can also be provided on the plunger **60** whereas the beads **91** are then provided on the control body **62.**

## Claims

1. A drain valve (30) for draining a biopharmaceutical container (12), comprising:
- a tubular valve body (58) extending along a main extension axis (A) and having an interior passageway (64),
- a plunger (60) which is moveable inside the tubular valve body (58) along said main extension axis (A) of the valve body (58) between a first position allowing fluid to flow through the interior passageway (64) and a second position blocking fluid to flow through the interior passageway (64),
- a control body (62), rotatable with regard to the valve body (58) around the main extension axis (A), wherein one among the plunger (60) and the valve body (58) has at least one slot (88) defining a cam track and another among the plunger (60) and the valve body (58) has at least one pin (72) received in the at least one slot (88), and
wherein one among the plunger (60) and the control body (62) has at least one bead (91) and another one among the plunger (60) and the control body (62) has at least one rectilinear groove (90) extending parallelly to the main extension axis (A) and designed to receive the at least one bead (91), so that a rotation of the control body (62) with regard to the valve body (58) around the main extension axis (A) induces a movement of the plunger (60) along the main extension axis (A) of the valve body (58).

2. The drain valve (30) according to claim 1, comprising at least one first seal (98; 99) between the control body (62) and the valve body (58), wherein the at least one first seal (98; 99) extends in a plane (P) perpendicular to the main extension axis (A) of the tubular valve body (58) delimiting a sterile portion (SP) of the drain valve (30), especially between the tubular valve body (58) and the control body (62), and a non-sterile portion (NP) of the drain valve (30), especially between the tubular valve body (58) and the control body (62), wherein the drain valve (30) preferably comprises two first seals (98, 99) between the control body (62) and the valve body (58), one first seal (98) extending longitudinally between the plunger (60) and the second first seal (99), wherein said one first seal (98) extends in a plane (P) perpendicular to the main extension axis (A) of the tubular body (58) delimiting a sterile portion (SP) of the drain valve (30), especially between the tubular valve body (58) and the control body (62), and a non-sterile portion (NP) of the drain valve (30), especially between the tubular valve body (58) and the control body (62), wherein the drain valve (30) preferably, wherein each of the at least one first seal (98; 99) is more preferably an O-ring (98; 99).

3. The drain valve (30) according to claim 1 or 2, comprising at least one second seal between the plunger (60) and the valve body (58), each of the at least one second seal being preferably an O-ring (84).

4. The drain valve (30) according to one of claims 1 to 3, wherein the valve body (58) comprises a flange (68) at first end thereof and the plunger (60) is flush with the flange (68) of the valve body (58) in the second position.

5. The drain valve (30) according to any one of the preceding claims, wherein, in the first position, the plunger (60) extends at least partially outside the valve body (58), especially outside the interior passageway (64) inside the valve body (58).

6. The drain valve (30) according to any one of claims 1 to 4, wherein in the first position, the plunger (60) extends inside the valve body (58), especially inside the interior passageway (64) inside the valve body (58).

7. The drain valve (30) according to any one of the preceding claims, wherein the control body (62) comprises at least one bracket (102) protruding from the valve body (58) in a plane extending perpendicularly to the main extension axis (A), the control body (62) preferably comprising at least two brackets (102) protruding from the valve body (58) in a plane extending perpendicularly to the main extension axis (A).

8. The drain valve (30) according to any of the preceding claims, wherein the drain valve (30) comprises a hose barb (104), the hose barb (104) being at a second end of the drain valve (30) opposite to the first end of the valve body (58), when applicable.

9. The drain valve (30) according to claim 8, wherein the hose barb (104) is fixed to the control body (62).

10. A biopharmaceutical container (12) comprising a closed bag (15) provided with a drain valve (30) according to any one of the preceding claims, the drain valve (30) being sealingly engaged to the bag (15).

11. A biopharmaceutical product processing apparatus (10), comprising:
a biopharmaceutical container (12) according to claim 10,
a mixing device (26) at least partially extending in the biopharmaceutical bag (15) and designed to be driven by a motor (34) outside the biopharmaceutical bag (15).

12. The biopharmaceutical product processing apparatus (10) according to claim 11, further comprising a vessel (14) receiving the biopharmaceutical container (12).

13. The biopharmaceutical product processing apparatus (10) according to claim 11 or 12, further comprising a motor (34) designed to be engaged with the mixing device (26).

14. The biopharmaceutical product processing apparatus (10) according to one of claims 11 to 13, wherein the mixing device (26) is comprised of a rotating rod (32) provided with at least one mixing element (36) fixed on the rotating rod (32).

15. A set (S) comprising:
- at least one drain valve according to any one of claims 1 to 7, the set preferably comprising several identical drain valves according to any one of claims 1 to 7,
- at least one first hose barb (104A) designed to be fixed to the control body (62), at a second end of the drain valve (30) opposite to the first end of the valve body (58), when applicable; and
- at least one second hose barb (104B) designed to be fixed to at least one among the valve body (58) and the control body (62), preferably to the control body (62), at a second end of the drain valve (30) opposite to the first end of the valve body (58), when applicable;
wherein said at least one first hose barb (104A) and said at least one second house barb (104B) are different, said at least one first hose barb (104A) and said at least one second house barb (104B) being preferably different by at least one among:
- type of barb
- the length and
- the diameter.
